# EUROPÄISCHE PATENTANMELDUNG

(11) **EP 0 955 339 A1**
(43) Veröffentlichungstag der Anmeldung: **10.11.1999**
(21) Anmeldenummer: 99108845.1
(22) Anmeldetag: 04.05.1999
(51) Int. Cl.: C08L 79/08, C08L 83/04

(54) **Extrudierbare, halogenfreie Mischung auf Basis von Polyetherimid-Polymer**

(30) Priorität: 06.05.1998 DE 19820095
(71) Anmelder: EILENTROPP KG, D-51676 Wipperfürth (DE)
(72) Erfinder: Schwamborn, Klaus, 51688 Wipperfürth (DE); Steffes, Walter, 51688 Wipperfürth (DE); Sikora, Manfred, 51688 Wipperfürth (DE)

(57) **Zusammenfassung**

Eine extrudierbare, halogenfreie Mischung auf Basis Polyetherimid-Polymere besteht aus 5-95 Gew.% eines flexiblen Polyetherimid-Siloxan-Copolymers mit einem Elastizitätsmodul kleiner als 2000 MPa, insbesondere kleiner als 1000 MPa, und 95-5 Gew.% eines Polyetherimid-Polymers mit einem Elastizitätsmodul größer als 2000 MPa.

## Beschreibung

Die vorliegende Erfindung betrifft eine extrudierbare halogenfreie Mischung auf Basis Polyetherimid-Polymere.

Bekannt ist es bereits, zur Verbesserung der Flammfestigkeit der Drähte Polyetherimid-Siloxan-Polymere zu verwenden oder aus so ertüchtigten Werkstoffen die Isolierung oder den Mantel elektrischer Kabel herzustellen (PCT WO94/27298),

Zu dem gleichen Zweck hat man auch bereits geringe Mengen (0,2 - 15 Gew.%) eines Siloxan-Polyetherimid-Copolymers mit einem Polyetherimid-Polymer verschnitten (EP 0417 513 A1). Verwendet hierzu werden die unter dem Handelsnamen ULTEM 1000, 5000 und 6001 der Firma GEC bekannten Polyetherimide, die mit dem ULTEM D9000, einem Siloxan-Polyetherimid-Copolymer der gleichen Firma, verschnitten werden. Diese Materialien lassen kostenmäßig einen breit gefächerten Einsatz zu, dieser Einsatz und seine technische Bedeutung beschränken sich bis heute allerdings auf die Herstellung von Spritzgußteilen. Die Abriebfestigkeit dieses Materials ist entsprechend hoch, ebenso die Kerbfestigkeit. Für flexible Kabelwerkstoffe ist dieses Material weniger geeignet.

Nun gibt es aber auch bereits unter dem Markennamen ULTEM ein Polyetherimid-Polymer, das sowohl durch Spritzguß als auch durch Extrusion zu verarbeiten ist. Dieses sogenannte flexible Copolymer ist deshalb unter der Markenbezeichnung SILTEM in den Markt eingeführt worden (GEC Information, Introduction, ULTEM Polyetherimide Resins). Dieses Copolymer zeichnet sich neben seiner Flexibilität durch eine hohe Abriebfestigkeit und chemische Beständigkeit aus. Der hohe Preis für dieses Copolymer beschränkt indessen seinen Einsatz auf spezielle Anwendungsgebiete.

Ausgehend von diesem Stand der Technik liegt der Erfindung die Aufgabe zugrunde, bei Mischungen bekannter Art auf der Basis Polyetherimid-Polymere eine kostengünstige Möglichkeit des Einsatzes für beliebige Anwendungsfälle zu finden.

Gelöst wird diese Aufgabe gemäß der Erfindung dadurch, daß die Mischung auf Basis Polyetherimid-Polymere aus 5 - 95 Gew.% eines flexiblen Polyetheerimid-Siloxan-Copolymers mit einem Elastizitätsmodul kleiner als 2000 MPa und 95 - 5 Gew.% eines Polyetherimid Polymers mit einem Elastizitätsmodul größer als 2000 MPa besteht. Innerhalb der angegebenen Grenzen für beide Komponenten lassen sich die Anteile beliebig kombinieren, so daß stets eine Anpassung an den jeweiligen Verwendungszweck einer solchen Mischung erreicht wird. An sich harte Mischungen auf Basis eines Polyetherimid-Polymers werden durch Zugabe eines flexiblen Polyetherimid-Siloxan-Copolymers gestreckt, solche Mischungen sind insbesondere für dünnwandige Beschichtungen, z.B. für elektrische Leiter, von Vorteil. Umgekehrt erfolgt eine Streckung eines flexiblen Polyetherimid-Siloxan-Copolymers mit einem Polyetherimid entsprechend den genannten Anteilen für solche Anwendungen, bei denen es, wie im Falle der Außenmäntel elektrischer Kabel, auf eine weichere Einstellung des Polymermaterials ankommt.

Die genannten Mischungen lassen einen kostengünstigen Einsatz insbesondere auch im Bereich elektrischer Kabel und Leitungen oder solcher Elemente zu, die optische Fasern enthalten. Dabei wird durch den jeweiligen Anteil der beiden Komponenten an der Gesamtmischung eine Anpassung z.B. der mechanischen Eigenschaften des Fertigproduktes an die jeweiligen Verwendungszwecke erreicht. Die Erfindung beruht nämlich auf der Erkenntnis, daß das in einem Polymerisationsprozeß mit dem Siloxan zusammengeführte Polyetherimid durch eine hinreichende Menge außerhalb des Polymerisationsprozesses zugegebenen Polyetherimids gestreckt und damit Eigenschaftsänderungen herbeigeführt werden können. Dabei ist es von besonderem Vorteil, daß bei diesem Verfahrensschritt im Grunde keine weiteren Zusatzstoffe benötigt werden, die in der fertigen Mischung des Eigenschaftsbild ggf. stören.

Wie bereits erwähnt, werden je nach Anwendungszweck die Komponenten unterschiedlich zu wählen sein. Handelt es sich beispielsweise um elektrische Kabel und Leitungen, um die Isolierung elektrischer Wickeldrähte usw., dann wird man erfindungsgemäß eine Mischung vorziehen, die aus 60- 90 Gew.% eines Polyetherimid-Polymers mit einem Elastizitätsmodul größer als 2000 MPa und 40 - 10 Gew.% eines flexiblen Polyetherimid-Siloxan-Copolymers mit einem Elastizitätsmodul kleiner als 1000 MPa besteht. Kommt es dagegen darauf an, dickwandigere Schichten im Kabel- oder Leitungsaufbau herzustellen, die dennoch eine hinreichende Flexibilität aufweisen, dann wird man eher eine Mischung wählen, die aus 60 - 90 Gew.% eines flexiblen Polyetherimid-Siloxan-Copolymers mit einem Elastizitätsmodul kleiner als 1000 MPa und 40 - 10 Gew.% eines Polyetherimid-Polymers besteht. Die Streckung des Polyetherimid-Polymers mit einem Elastizitätsmodul größer als 2000 MPa mit dem flexiblen Polyetherimid-Siloxan-Copolymer bedeutet hierbei eine Herabsetzung des Härtegrades der aus den beiden amorphen Komponenten bestehenden nun mehr extrudierbaren Mischung.

Neben den bereits genannten elektrischen Kabeln und Leitungen können aus diesem Material hergestellte Schichten oder Hüllen auch in optischen Kabeln und Leitungen eine vorteilhafte Anwendung finden, beispielsweise auch dadurch, daß die die optischen Fasern aufnehmenden Kunststoffröhrchen aus den erfindungsgemäßen Mischungen hergestellt sind. Auch sonstige selbsttragende Elemente, wie z.B. Rohre zum Transport flüssiger oder gasförmiger Medien, können, was die Rohrwandung betrifft, in ihrem Eigenschaftsprofil durch Wahl entsprechender Anteile einer der beiden Komponenten variiert werden.

Ausgehend z.B. von einem Mischungsverhältnis 50:50 Gew.% eines flexiblen Polyetherimid-Siloxan-Copolymers (SILTEM) und eines Polyetherimid-Polymers (ULTEM) in einem sogenannten Blend, sind zur Erzielung härterer Extrudate die Mischungsverhältnisse in Richtung 40:60 Gew.% oder gar in Richtung 30:70 Gew.% (SILTEM:ULTEM) zu verändern, je nach den vorgegebenen Anforderungen. Umgekehrt sind bei gleichem Ausgangsverhältnis 50:50 Gew.% die Anteile von SILTEM gegenüber ULTEM zu erhöhen, etwa in Richtung 60:40 Gew.%, 70:30 Gew.% oder 80:20 Gew.%, wenn weichere Extrudate angefordert werden.

Für die Erfindung kommt es im Gegensatz zum Stand der Technik (EP 0417 513 A1) also nicht darauf an, durch eine Zumischung von einem Siloxan-Polyetherimid-Copolymer in geringerer Menge das Brandverhalten eines Polyetherimid-Polymers zu verbessern, sondern durch eine Mischung eines Polyetherimid-Polymers mit einem flexiblen Siloxan-Polyetherimid-Copolymer in hinreichender Menge die Verarbeitungsfähigkeit der Polyetherimid-Polymere zu verbessern, um so neue Produkte für neue Anwendungsbereiche zu ermöglichen. Entscheidend dabei ist für die Erfindung der Einsatz des unter der Marke SILTEM bekannten flexiblen Polyetherimid-Siloxan-Copolymers mit gegenüber dem Polyetherimid-Siloxan-Copolymer, nämlich dem ULTEM D9000 der GEC, wesentlich geringerem Elastizitätsmodul. Nach Angaben des Herstellers (GEC Product Information 3, Product Selection) liegt beispielsweise das Elastizitätsmodul von ULTEM 9075 bei 3000 MPa gegenüber dem von SILTEM in der Größenordnung von 475 MPa. Darüber hinaus zeichnet sich SILTEM durch eine niedrigere Dichte von 1,18g/cm³ und eine geringere Zugfestigkeit, nämlich von nur 20 MPa aus.

Erfindungsgemäße Mischungen können im übrigen, wie andere polymere Materialien auch, gegen die Einwirkung äußerer mechanischer Kräfte verstärkt werden, beispielsweise dadurch, daß die Mischung Verstärkungselemente, wie Glas und/oder Kohlenstoffasern, enthält.

Zunehmend wird die Forderung nach einer Flammfestigkeit halogenfreier Mischungen gestellt. Auch insoweit ist die Erfindung den Bedürfnissen anpaßbar, als bekannte flammfest machende Zusätze, wie Aluminium- und/oder Magnesiumhydroxid zugegeben werden können, die zu einer wesentlichen Erhöhung der Flammbeständigkeit führen.

Die gemäß der Erfindung vorgeschlagenen Mischungen sind vernetzbar, die Vernetzung kann auf bekannte Weise erfolgen, beispielsweise durch eine peroxydische Vernetzung jeweils nach der Extrusion des aus den beiden Komponenten bestehenden Materials.

Ebenso kann die erfindungsgemäße Mischung Farbpigmente enthalten, die, beispielsweise in Form eines Rußes, den schädlichen Einfluß ultravioletter Strahlung auf das hergestellte Produkt reduzieren oder auch mit einer Einfärbung der Mischung in beliebigen Farbtönen für eine Farbkennzeichnung und damit zur Unterscheidung einzelner Produkte sorgen.

Wesentlich für die Erfindung ist auch ein Verfahren zur Herstellung der Mischung aus den beiden Komponenten, flexibles Polyetherimid-Siloxan-Copolymer und Polyetherimid-Polymer. Entsprechend der Erfindung werden die Mischungskomponenten zunächst jede für sich vorgetrocknet zusammengeführt. Dieses Gemenge wird aufgeschmolzen und die Schmelze extrudiert, wobei aus dem Extrudat ein verarbeitungsfähiges Granulat hergestellt wird. Dieses Granulat kann dann in handelsüblichen Extrudern zum Aufbringen einer Hülle z.B. in Form einer elektrischen Isolierung oder einer Schutzschicht weiterverarbeitet werden.

Mitunter kann es auch vorteilhaft sein, die aus dem Gemenge der beiden Komponenten gewonnene Schmelze unmittelbar einer Weiterverarbeitungsvorrichtung, beispielsweise auch einem Extruder, zum Herstellen eines Schutzröhrchens, zur Ummantelung eines Kabels usw., zuzuführen.

Die geschilderten Vorteile der erfindungsgemäßen Mischungen werden im wesentlichen dadurch begründet, daß nach dem physikalischen Mischen der beiden Komponenten und während des Aufschmelzens eines solchen Gemenges das durch einen Polymerisationsprozeß mit dem Siloxan verbundene flexible Polyetherimid mit dem von diesem getrennt zugegebenen ungebundenen Polyetherimid-Polymer eine gemeinsame Matrix bilden, in dem die Siloxankomponente eingebettet ist. Je nach Anteil der einen oder anderen Komponente liegt das Siloxanmolekül in einer offenen weiten Verteilung oder in einer dichten, in jedem Fall aber gleichmäßigen Verteilung in der Polyetherimidmatrix vor. D.h., je nach Übergewicht der einen oder anderen Komponente läßt sich das Eigenschaftsbild der erfindungsgemäßen Mischung stetig verändern.

Als Prozeßtemperatur beim Aufschmelzen des aus den beiden Komponenten flexibles Polyetherimid-Siloxan-Copolymer und Polyetherimid-Polymer hat sich ein Temperaturbereich von 250° - 350° C als besonders vorteilhaft erwiesen. Die jeweilige tatsächliche Prozeßtemperatur ist im wesentlichen auch abhängig davon, welche zusätzlichen Komponenten, beispielsweise flammfest machende Zusätze usw., die erfindungsgemäße Mischung enthält.

## Patentansprüche

1. Extrudierbare, halogenfreie Mischung auf Basis Polyetherimid-Polymere bestehend aus
5-95 Gew.% eines flexiblen Polyetherimid-Siloxan-Copolymers mit einem Elastizitätsmodul kleiner als 2000 MPa und
95-5 Gew.% eines Polyetherimid-Polymers mit einem Elastizitätsmodul größer als 2000 MPa.

2. Mischung nach Anspruch 1 als Isoliermischung für strangförmiges Gut, wie elektrische Kabel und Leitungen, gekennzeichnet durch
60-90 Gew.% eines Polyetherimid-Polymers mit einem Elastizitätsmodul größer als 2000 MPa und
40-10 Gew.% eines flexiblen Polyetherimid-Siloxan-Copolymers mit einem Elastizitätsmodul kleiner als 1000 MPa.

3. Mischung nach Anspruch 1 als Mantelmischung für strangförmiges Gut, wie elektrische oder optische Kabel, Rohrleitungen und dergl., gekennzeichnet durch,
60-90 Gew.% eines flexiblen Polyetherimid-Siloxan-Copolymers mit einem Elastizitätsmodul kleiner als 1000 MPa und
40-10 Gew.% eines Polyetherimid-Polymers mit einem Elastizitätsmodul größer als 2000 MPa.

4. Mischung nach Anspruch 1 oder einem der folgenden, dadurch gekennzeichnet, daß sie Verstärkungselemente, wie Glas- und/oder Kohlenstoffasern enthält.

5. Mischung nach Anspruch 1 oder einem der folgenden, dadurch gekennzeichnet, daß sie flammfestmachende Zusätze, wie Aluminium- und/oder Magnesiumhydroxid enthält.

6. Mischung nach Anspruch 1 oder einem der folgenden, dadurch gekennzeichnet, daß sie vernetzbar ist.

7. Mischung nach Anspruch 1 oder einem der folgenden, dadurch gekennzeichnet, daß sie Farbpigmente enthält.

8. Verfahren zur Herstellung einer Mischung nach Anspruch 1 oder einem der folgenden, dadurch gekennzeichnet, daß die Mischungskomponenten zunächst jede für sich vorgetrocknet und anschließend in einem physikalischen Gemenge zusammengeführt werden, daß dieses Gemenge aufgeschmolzen und die Schmelze extrudiert und aus dem Extrudat ein verarbeitungsfähiges Granulat hergestellt wird.

9. Verfahren nach Anspruch 8, dadurch gekennzeichnet, daß die Prozeßtemperatur beim Aufschmelzen des Gemenges 250° - 350° C beträgt.
